# EUROPEAN PATENT SPECIFICATION

(11) **EP 4 411 958 B1**
(45) Date of publication and mention of the grant of the patent: **08.07.2026**
(21) Application number: 23880913.1
(22) Date of filing: 20.07.2023
(51) Int. Cl.: H01M 10/613, H01M 10/625, H01M 50/367, H01M 50/204, H01M 50/209, H01M 50/342, H01M 10/6551, H01M 50/271

(54) **BATTERY PACK WITH DOUBLE COVER**
BATTERIEPACK MIT DOPPELDECKEL DAFÜR
BLOC-BATTERIE SUR LEQUEL EST APPLIQUÉ UN DOUBLE CAPOT

(30) Priority: 15.12.2022 KR 20220175851
(43) Date of publication of application: 07.08.2024
(73) Proprietor: LG Energy Solution, Ltd., Seoul 07335 (KR)
(72) Inventor: LEE, Jung Hoon, Daejeon 34122 (KR); KIM, Kwang Mo, Daejeon 34122 (KR); JUNG, Hye Mi, Daejeon 34122 (KR)
(74) Representative: Plasseraud IP
(86) International application number: PCT/KR2023/010476
(87) International publication number: WO 2024/128452

(56) References cited:
- CN-A- 115 472 950
- CN-U- 217 903 215
- CN-U- 217 903 215
- JP-B2- 6 279 834
- KR-A- 20220 098 588
- KR-A- 20220 130 574
- US-A1- 2021 402 884

## Description

### TECHNICAL FIELD

The present disclosure relates to a battery pack, and more specifically, to a battery pack with a double cover that may prevent continuous ignition of modules inside the battery pack.

### BACKGROUND

Unlike primary batteries, which cannot be recharged, secondary batteries refer to batteries that may be charged and discharged, and they are applied not only to portable devices but also to electric vehicles (EVs) and hybrid vehicles (HEVs) that are driven by an electrical drive source.

Types of secondary batteries currently in wide use may include lithium ion batteries, lithium polymer batteries, nickel cadmium batteries, nickel hydrogen batteries, and nickel zinc batteries. An operating voltage of such a unit secondary battery cell, that is, a unit battery cell, is approximately 2.5V to 4.6V. Accordingly, when a higher output voltage is required, a battery pack is formed by connecting multiple battery cells in series. Additionally, a battery pack may be constructed by connecting multiple battery cells in parallel depending on the charge/discharge capacity required for the battery pack. Accordingly, the number of battery cells included in the battery pack may be set in various ways depending on the required output voltage or charge/discharge capacity. CN 115 472 950 discloses a battery unit according to the preamble of claim 1. CN 217 903 215 discloses a battery pack.

When constructing a battery pack by connecting a plurality of battery cells in series/parallel, generally, a battery module consisting of at least one battery cell, preferably a plurality of battery cells, is first constructed, and a battery pack is constructed by using at least one such battery module and adding other components. Here, the battery module refers to a component in which multiple battery cells are connected in series or parallel, and the battery pack refers to a component in which multiple battery modules are connected in series or parallel to increase capacity, output and the like.

Typically, a vehicle battery pack includes a plurality of battery modules or battery module assemblies disposed on a same plane to maintain structural stability.

However, in such a battery pack, if there is overcharging, an explosion or fire may occur due to swelling of the battery module, and such explosion or fire may cause greater risk that may lead to casualties.

Accordingly, there is a need to find a way to provide a battery pack that may prevent additional ignition of adjacent battery modules when some battery modules in the battery pack ignite.

### TECHNICAL OBJECTS

The present disclosure is directed to providing a battery pack that may prevent chain ignition of adjacent battery modules when some battery modules in the battery pack ignite.

### TECHNICAL MEANS

According to the present disclosure, a battery pack with a double cover includes: a plurality of battery modules; and a case accommodating the battery modules, wherein the case includes the double cover disposed at an upper portion of the case, and the double cover includes: a first lid disposed above the battery module and having a through hole; and a second lid above the first lid and spaced apart from the first lid.

Furthermore, the battery pack with the double cover further includes a partition wall between the battery modules positioned on left and right sides in the case.

Furthermore, the partition wall is disposed below the double cover.

Furthermore, the through hole of the first lid is positioned above the partition wall. Furthermore, a heat dissipation hole may be formed in the second lid of the double cover.

Furthermore, the battery pack with the double cover may further include a flow path forming member protruding from a top of the partition wall in a direction of the through hole.

Furthermore, the flow path forming member may be disposed on left and right sides in a width direction of the partition wall, respectively.

Furthermore, when the battery module disposed on one side of the partition wall ignites, the flow path forming member may be bent in a direction of the battery module disposed on another opposite side of the partition wall due to heat from the ignition.

Furthermore, the flow path forming member may include a support leg that is supported on an upper surface of the partition wall when the flow path forming member is bent upon the ignition of the battery module.

Furthermore, the battery pack with the double cover may further include a heat dissipation guide between the first lid and the second lid, the heat dissipation guide being configured to guide heat dissipation.

Furthermore, the heat dissipation guide may be disposed on opposite sides with respect to the through hole.

Furthermore, the heat dissipation guide may be disposed on opposite edges of the through hole.

Furthermore, the heat dissipation guide may be openable and closable between the first lid and the second lid, and the heat dissipation guides may be open to dissipate heat when the battery module ignites.

Furthermore, the heat dissipation guide may include: a lower guide disposed on the first lid; and an upper guide disposed on the second lid.

### EFFECTS OF THE INVENTION

Therefore, according to the present disclosure, a battery pack is provided that may prevent chain ignition of adjacent battery modules when some battery modules in the battery pack ignite.

### BRIEF DESCRIPTION OF THE DRAWINGS

FIG. 1 is a longitudinal cross-sectional view illustrating a battery pack with a double cover according to an embodiment of the present disclosure,
FIG. 2 is a perspective view illustrating a battery pack with a double cover according to an embodiment of the present disclosure,
FIG. 3 is a detailed view illustrating part A in FIG. 1,
FIG. 4 is a view illustrating a heat dissipation flow path when one battery module in FIG. 3 ignites, and
FIG. 5 is a longitudinal cross-sectional view illustrating a battery pack with a double cover according to another embodiment of the present disclosure.

### DETAILED DESCRIPTION

The advantages and features of the present disclosure and methods for achieving them will become clear by referring to the embodiments described in detail below along with the accompanying drawings. However, the present disclosure is not limited to the embodiments disclosed below and will be implemented in various different forms. The present embodiments only serve to ensure that the disclosure of the present disclosure is complete, it is provided to fully inform those who have common knowledge in the technical field to which the present disclosure pertains, and the present disclosure is only defined by the scope of the claims. Accordingly, in some embodiments, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a part of a layer, film, region, plate, etc. is said to be "on" another part, this includes not only being "directly on" the other part, but also cases where there is another part in between. Conversely, when a part is said to be "directly on top" of another part, it means that there is no other part in between. Additionally, when a part of a layer, film, region, plate, etc. is said to be "beneath" another part, this includes not only cases where it is "directly below" another part, but also cases where there is another part in between. Conversely, when a part is said to be "directly below" another part, it means that there is no other part in between.

Spatially relative terms such as "below", "beneath", "lower", "above", "upper", etc. are used to easily describe the correlation between one element or component and other elements or components as illustrated in the drawing. Spatially relative terms should be understood as terms that include different directions of the element during use or operation in addition to the direction illustrated in the drawings. For example, if an element illustrated in the drawings is turned over, an element described as "below" or "beneath" another element may be disposed "above" the other element. Accordingly, the illustrative term "down" may include both downward and upward directions. Elements may also be oriented in other directions, so spatially relative terms may be interpreted according to orientation.

Hereinafter, a battery pack with a double cover according to a preferred embodiment of the present disclosure will be described in detail with reference to the attached drawings.

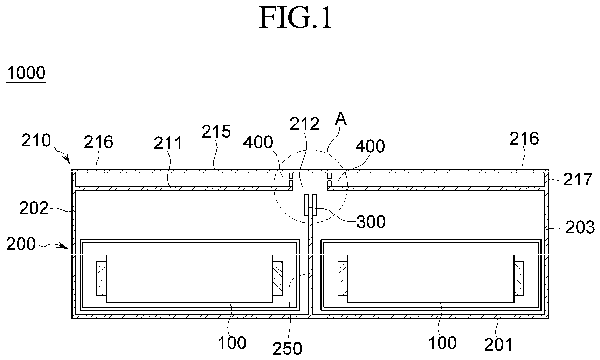

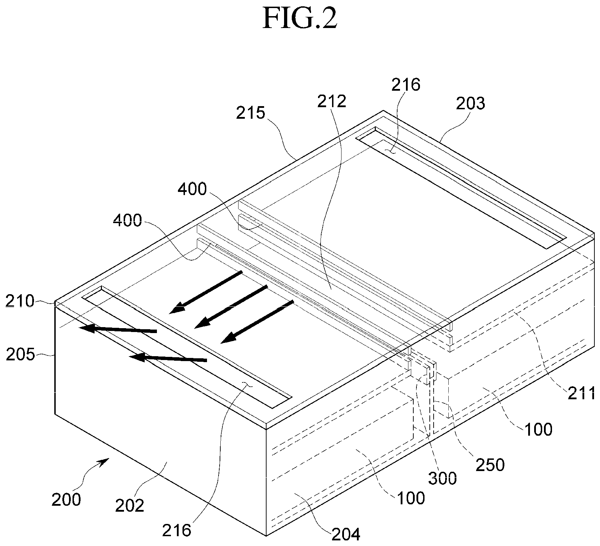

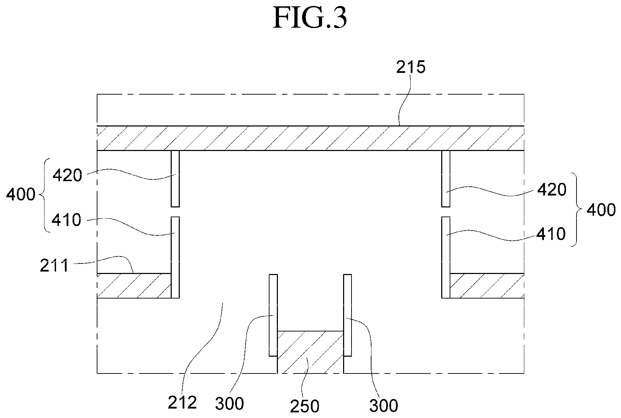

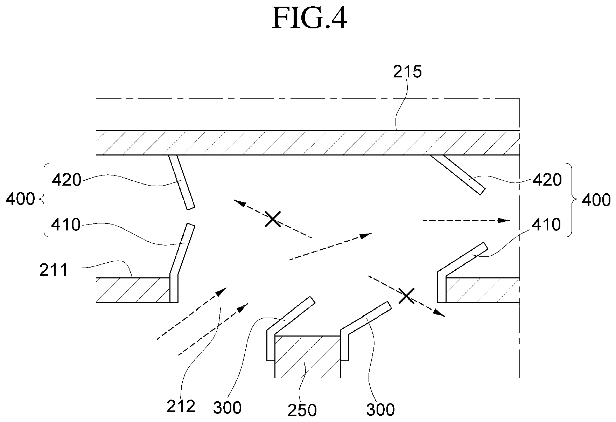

FIG. 1 is a longitudinal cross-sectional view illustrating a battery pack with a double cover according to an embodiment of the present disclosure, FIG. 2 is a perspective view illustrating a battery pack with a double cover according to an embodiment of the present disclosure, FIG. 3 is a detailed view illustrating part Ain FIG. 1, and FIG. 4 is a view illustrating a heat dissipation flow path when one battery module in FIG. 3 ignites.

A battery pack 1000 with a double cover according to the present disclosure includes a plurality of battery modules 100, a case 200 for accommodating the plurality of battery modules 100; and a partition wall 250 in the case 200, and the case 200 includes a double cover 210.

The battery module 100 accommodated in the battery pack 1000 includes a plurality of battery cells (not illustrated), and each battery cell may be, for example, a pouch-type battery cell.

As an example, the battery module 100 may include a plurality of battery cells stacked on each other, and each battery cell may be provided with electrode leads at front and rear ends, respectively, with an anode lead at the front end and a cathode lead at the rear end. The plurality of battery cells in the battery module 100 may be stacked to be electrically connected to each other.

The battery cells are not limited to pouch-type battery cells and may be made into other types of battery cells such as prismatic battery cells, and the plurality of battery cells may be accommodated in the case of the battery module 100.

The case 200 is for accommodating the plurality of battery modules 100 and includes a bottom 201, a left side 202, a right side 203, a front side 204, and a rear side 205, and a cover covering the case 200 is disposed at an upper portion of the case 200.

The bottom 201 of the case 200 is in the form of a plate extending in the horizontal direction and forms a bottom of the case 200.

In the case 200, the left side 200 and the right side 203 form left and right side surfaces of the case 200, respectively, and the left side 202 and the right side 203 are disposed on the left and right edges of the bottom 201, respectively.

In the case 200, the front side 204 and the rear side 205 form front and rear surfaces of the case 200, respectively, and the front side 204 and the rear side 205 are disposed at front and rear edges of the bottom 201, respectively.

As such, the left side 202, the right side 203, the front side 204, and the rear side 205 of the case 200 form side surfaces of the case 200.

In the present embodiment, the case 200 is illustrated in the form of a quadrangular box as illustrated, but it is not limited to this and may be configured in various shapes, including polygons.

Additionally, a partition wall 250 is disposed at a center of the case 200.

The partition wall 250 which partitions a space for accommodating the battery module 100 disposed on the left side and the battery module 100 disposed on the right side in the case 200 is disposed perpendicularly to the bottom 201 of the case 200, and one end and another end of the partition wall 250 may be disposed in contact with the front side 204 and the rear side 205, respectively.

As illustrated in FIG. 1, the battery modules 100 are accommodated on the left and right sides with respect to the partition wall 250, and a height of the partition wall 250 from the bottom 201 of the case 200 may be configured to be equal to or lower than that that of the first lid 211.

FIG. 1 is a longitudinal cross-sectional view illustrating the battery pack 1000 according to the present embodiment, in which a left battery module 100 and a right battery module 100 are disposed with respect to the partition wall 250 inside the case 200.

Meanwhile, in another embodiment, unlike in FIG. 1, two or more partition walls 250 may be disposed in the left and right direction, and in FIG. 2, two or more battery modules 100 may be disposed in the front and rear direction. When two or more battery modules 100 are disposed from the front side 204 to the rear side 205, a separation wall may be disposed between the battery modules 100. The separation wall may extend from the left side 202 to the right side 203, and a top of the separation wall may extend to a bottom of the first lid 211.

A cover that covers the inside of the case 200 is disposed at an upper portion of the case 200. In the present disclosure, the cover of the case 200 is configured as a double cover 210. The cover may be coupled to a body of the case 200, or may be formed integrally with the body of the case 200. When the cover is coupled to the body of the case 200, it may be coupled with bolts to a top of each of the left side, right side, the front side, and the rear side of the case 200, respectively.

In the present disclosure, the double cover 210 constituting the cover of the case 200 includes a first lid 211, a second lid 215, and a side wall 217.

The first lid 211 is disposed above the battery module 100 and the partition wall 250, and edges of the first lid 211 may be disposed on the left side 202, the right side 203, the front side 205 and the rear side 205 of the case 200, respectively. The first lid 211 may be disposed upwardly apart from the partition wall 250 by a certain distance.

A through hole 212 is formed in the first lid 211 above of the partition wall 250.

In the present embodiment, the through hole 212 of the first lid 211 is disposed at a center of the first lid 211 as illustrated in FIG. 1, and as illustrated, the through hole 212 of the first lid 211 is disposed to overlap the partition wall 250 in a plan view. Specifically, in the present embodiment, the partition wall 250 is disposed at the center of the through hole 212 in a plan view, and a left and right width of the through hole 212 is larger than a width of the partition wall 250.

As illustrated in FIG. 2, the through hole 212 of the first lid 211 is formed to extend along a longitudinal direction of the partition wall 250, and a length of the through hole 212 along a longitudinal direction of the partition wall 250 may be equal to or smaller than that of the partition wall 250.

A heat dissipation guide 400 is disposed on opposite edges of the through hole 212, respectively, with respect to the partition wall 250.

The side wall 217 constitutes a side surface of the double cover 210, and is disposed along an edge of the first lid 211, and the second lid 215 is disposed at a top of the side wall 217.

The second lid 215 is disposed upwardly apart from the first lid 211 and disposed at a top of the side wall 217, and an edge of the second lid 215 may be disposed at the top of the side wall 217.

Heat dissipation holes 216 are formed at opposite edges of the second lid 215. The heat dissipation hole 216 is for discharging heat emitted from an ignited battery module 100 when one of the battery modules 100 ignites, and as illustrated in FIG. 2, the heat dissipation hole 216 located on a left side of the second lid 215 extends along a left side end of the second lid 215, and the heat dissipation hole 216 disposed on a right side of the second lid 215 extends along a right side end of the second lid 215.

Accordingly, in the present disclosure, heat generated from the ignited battery module 100 flows into the space between the first lid 211 and the second lid 215 in a diagonal direction through the through hole 212 in the form of gas or thermal energy and is then discharged through heat dissipation hole 216 on one side. As such, in the present disclosure, since the cover of the case 200 is configured as the double cover 210, and the double cover 210 serves as a heat energy discharge passage, heat energy generated from ignition may be discharged to the outside, rapid inflow of oxygen from the outside may be prevented, and sparks or flames may be prevented, thereby preventing continuous ignition.

In the present disclosure, a flow path forming member 300 is disposed on the partition wall 250. As illustrated, the flow path forming member 300 is disposed to protrude from a top of the partition wall 250 in a direction of the through hole 212, and is disposed on left and right sides in a width direction (thickness direction) of the partition wall 250.

As illustrated in FIG. 3, the flow path forming member 300 disposed on opposite sides of the partition wall 250 may be formed including a lower portion coupled to the partition wall 250 and an upper portion protruding from the top of the partition wall 250 in the direction of the through hole 212.

The lower portion of the flow path forming member 300 may be coupled to an upper portion of one side of the partition wall 250 as illustrated, and may be fastened to the partition wall 250 with bolts, for example.

The upper portion of the flow path forming member 300 protrudes from the partition wall 250 so that a top of the upper portion may be located at a same level as or lower than the first lid 211 with respect to the bottom 201.

FIG. 4 is a diagram illustrating movement of heat in the present disclosure when the battery module 100 disposed on a left side of the partition wall 250 ignites, where when the battery module 100 disposed on the left side of the partition wall 250 ignites, due to heat generated therefrom, the flow path forming member 300 is bent toward the battery module 100 on an opposite right side, thereby blocking inflow of heat energy into the right battery module 100. Furthermore, this causes heat (thermal energy or gas form) to move in a diagonal direction and guides the movement of heat into a space between the first lid 211 and the second lid 215 above the right battery module 100.

Similarly, although not illustrated, when the battery module 100 disposed on the right side of the partition wall 250 ignites, due to heat generated therefrom, the flow path forming member 300 is bent toward the left battery module 100, thereby blocking inflow of heat energy into the left battery module 100, and guiding heat (thermal energy or gas form) to move upward to the left into a space between the first lid 211 and the second lid 215 located above the left battery module 100.

A material of the flow path forming member 300 may include, for example, aluminum, stainless steel (SUS), and the like, and a thickness may be less than 1 mm, but it is not limited thereto, and a configuration in which the flow path forming member 300 is flexible to bend due to the heat generated toward the opposite battery module 100 may be used.

Additionally, in the present disclosure, a heat dissipation guide 400 is disposed on the double cover 210. The heat dissipation guide 400 is disposed between the first lid 211 and the second lid 215 in the double cover 210 to guide heat discharge when the battery module 100 ignites, and the heat dissipation guide 400 is disposed to be openable and closable between the first lid 211 and the second lid 215 to control heat discharge. Here, closing of the heat dissipation guide 400 means not only completely closing a space between the first lid 211 and the second lid 215, but also minimizing the space for heat flow between the first lid 211 and the second lid 215. Similarly, opening of the heat dissipation guide 400 means not only fully opening but also increasing the space for heat flow between the first lid 211 and the second lid 215 relative to the closed state.

In the present disclosure, the heat dissipation guide 400 is disposed opposite to each other on opposite sides with respect to the through hole 212 between the first lid 211 and the second lid 215 as illustrated in FIGS. 3 and 4, and each heat dissipation guide 400 includes a lower guide 410 and an upper guide 420.

The lower guide 410 is disposed on the first lid 211 and extends by protruding from the first lid 211 in a direction of the second lid 215. A height of the lower guide 410 protruding from the first lid 211 may be equal to or less than half a distance between the first lid 211 and the second lid 215 and may be formed to have a length equal to a length of the first lid 211 in a direction from the front side 204 to the rear side 205. FIGS. 3 and 4 illustrate an example in which the lower guide 410 is disposed at an edge of the through hole 212, and the lower guide 410 may be coupled to an inner peripheral surface of the through hole 212 with a bolt.

The upper guide 420 on the second lid 215 protrudes and extends in a direction of the first lid 211 to face the lower guide 410 and is disposed directly above the lower guide 410. In the present embodiment, the upper guide 420 may be coupled to the second lid 215 with a bolt. A height of the upper guide 420 protruding from the second lid 215 may be equal to or less than half the distance between the first lid 211 and the second lid 215 and may be formed to have a length equal to a length of the second lid 215 in the direction from the front side 204 to the rear side 205.

In a state that the space between the first lid 211 and the second lid 215 is closed as illustrated in FIG. 3, when the battery module 100 ignites, the upper and lower guides 420 and 410 are deformed by the heat as illustrated in FIG. 4 to be bent toward an end portion of the second lid 215 where the heat dissipation hole 216 is formed, thereby opening the space between the first lid 211 and the second lid 215 to guide heat dissipation.

In the present embodiment, the heat dissipation guide 400 is described as including the upper and lower guides 420 and 410, but as another example, it may be composed of the upper guide 420 or the lower guide 410.

A material of the heat dissipation guide 400 may include, for example, aluminum or stainless steel (SUS), and a thickness may be less than 1 mm, but it is not limited thereto.

In a normal state, in the battery pack 1000 with the double cover according to the present disclosure having the above-described configuration, the flow path forming member 300 which is disposed above the partition wall 250 maintains a vertical state and the heat dissipation guide 400 disposed between the first lid 211 and the second lid 215 maintains a closed state, as illustrated in FIG. 3.

In this state, when the battery module 100 on one side of the partition wall 250 ignites as illustrated in FIG. 4, the heat generated from the ignited battery module 100 flows toward the through hole 212.

At this time, the flow path forming member 300 disposed above the partition wall 250 is deformed and bent toward the opposite battery module 100 due to the heat flowing into the space between the through hole 212 and the partition wall 250.

Accordingly, the flow path forming member 300 blocks the inflow of heat energy into the opposite battery module 100, and guides heat (thermal energy or gas form) to move in a diagonal direction toward the space between the first lid 211 and the second lid 215 above the opposite battery module 100.

The heat passing through the flow path forming member 300 moves in a diagonal direction as illustrated in FIG. 4 and moves between the first lid 211 and the second lid 215 above the opposite battery module 100.

Then, the heat dissipation guide 400 between the first lid 211 and the second lid 215 above the opposite battery module 100 (right side of the through hole 212 in FIG. 4) is deformed by heat as illustrated in FIG. 4 to be in an open state, and accordingly, heat moves to the space between the first lid 211 and the second lid 215 and is then discharged through the heat dissipation hole 216. At this time, the heat dissipation guide 400 between the first lid 211 and the second lid 215 above the ignited battery module 100 (left side of the through hole 212 in FIG. 4) is in a closed state, thereby preventing the explosive inflow of oxygen from the outside and preventing the discharge of sparks generated internally.

As such, in the present disclosure, when the battery module 100 disposed on one side of the partition wall 250 ignites, the flow path forming member 300 blocks heat from flowing into the adjacent battery module 100, thereby preventing chain explosion of the battery module 100, a heat energy discharge path is formed through the double cover 210, and explosive oxygen inflow from the outside and discharge of sparks generated inside are prevented.

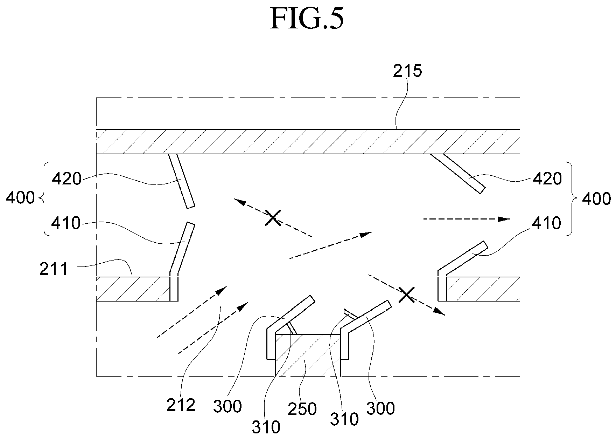

FIG. 5 illustrates a battery pack with a double cover according to a second embodiment of the present disclosure, where a difference of the second embodiment from the first embodiment is that the flow path forming member 300 has a support leg 310.

The support leg 310 is disposed on one side of the flow path forming member 300 disposed on opposite sides of the partition wall 250 to support the flow path forming member 300, and as illustrated in FIG. 5, when the flow path forming member 300 is bent toward the opposite right battery module 100 as illustrated by the heat generated due to ignition of the battery module 100, the support leg 310 is supported on an upper surface of the partition wall 250.

If the flow path forming member 300 is excessively bent toward the opposite battery module 100, it will not be able to block heat from flowing toward the opposite battery module 100, but in the present embodiment, the support leg 310 is supported by the upper surface of the partition wall 250, and excessive deformation of the flow path forming member 300 is prevented, thereby preventing the problem of not being able to block heat from flowing into the opposite battery module 100.

The support legs 310 may be formed to have a length equal to a length of the flow path forming member 300 in a longitudinal direction of the partition wall 250, and a plurality of support legs 310 may be formed along the longitudinal direction of the partition wall 250 while being spaced apart from each other.

In another embodiment, a support (not illustrated), instead of the support leg 310, may be provided on the upper surface of the partition wall 250 to support the flow path forming member 300 when the flow path forming member 300 is bent toward the opposite right battery module 100. The support may be disposed on the upper surface of the partition wall 250 to prevent the flow path forming member 300 from being excessively deformed.

### INDUSTRIAL APPLICABILITY

The present disclosure provides a battery pack that prevents chain ignition of adjacent battery modules when some battery modules in the battery pack ignite.

## Claims

1. A battery pack (1000) with a double cover, the battery pack (1000) comprising:
a plurality of battery modules (100); and
a case (200) accommodating the battery modules (100),
wherein the case (200) comprises the double cover (210) disposed at an upper portion of the case (200), and the double cover (210) comprises:
a first lid (211) disposed above the battery module (100) and having a through hole (212);
a second lid (215) above the first lid (211) and spaced apart from the first lid (211), and
a partition wall (250) between the battery modules (100) positioned on left and right sides in the case (200),
wherein the partition wall (250) is disposed below the double cover (210), and
wherein the through hole (212) of the first lid (211) is positioned above the partition wall (250) and disposed at a center of the first lid (211), **characterised in that**
the through hole (212) of the first lid (211) is disposed to overlap the partition wall (250) in a plan view.

2. The battery pack (1000) with the double cover of claim 1, wherein a heat dissipation hole (216) is formed in the second lid (215) of the double cover (210).

3. The battery pack (1000) with the double cover of claim 1, further comprising a flow path forming member (300) protruding from a top of the partition wall (250) in a direction of the through hole (212).

4. The battery pack (1000) with the double cover of claim 3, wherein the flow path forming member (300) is disposed on left and right sides in a width direction of the partition

5. The battery pack (1000) with the double cover of claim 3, wherein the flow path forming member (300) comprises:
- a lower portion coupled to an upper portion of one side of the partition wall (250), and
- the upper portion protruding from the partition wall (250) so that a top of said upper portion is located at a same level as or lower than the first lid (211).

6. The battery pack (1000) with the double cover of claim 5, wherein the flow path forming member (300) comprises a support leg (310) that is supported on an upper surface of the partition wall (250) when the flow path forming member (300) is bent upon the ignition of the battery module (100).

7. The battery pack (1000) with the double cover of claim 1 or claim 2, further comprising a heat dissipation guide (400) between the first lid (211) and the second lid (215), the heat dissipation guide (400) being configured to guide heat dissipation.

8. The battery pack (1000) with the double cover of claim 7, wherein the heat dissipation guide (400) is disposed on opposite sides with respect to the through hole (212), respectively.

9. The battery pack (1000) with the double cover of claim 8, wherein the heat dissipation guide (400) is disposed on opposite edges of the through hole (212), respectively.

10. The battery pack (1000) with the double cover of claim 7, wherein the heat dissipation guide (400) is openable and closable between the first lid (211) and the second lid (215), and
the heat dissipation guide (400) is opened to dissipate heat when the battery module (100) ignites.

11. The battery pack (1000) with the double cover of claim 10, wherein the heat dissipation guide (400) comprises:
a lower guide (410) disposed on the first lid (211); and
an upper guide (420) disposed on the second lid (215).

## Patentansprüche

1. Batteriepack (1000) mit einem Doppeldeckel, wobei das Batteriepack (1000) umfasst: eine Vielzahl von Batteriemodulen (100); und ein Gehäuse (200), das die Batteriemodule (100) aufnimmt, wobei das Gehäuse (200) den Doppeldeckel (210) umfasst, der an einem oberen Abschnitt des Gehäuses (200) angeordnet ist, und der Doppeldeckel (210) umfasst: einen ersten Deckel (211), der über dem Batteriemodul (100) angeordnet ist und ein Durchgangsloch (212) aufweist; einen zweiten Deckel (215) über dem ersten Deckel (211) und von dem ersten Deckel (211) beabstandet, und eine Trennwand (250) zwischen den Batteriemodulen (100), die auf der linken und rechten Seite im Gehäuse (200) positioniert sind, wobei die Trennwand (250) unterhalb des Doppeldeckels (210) angeordnet ist, und wobei das Durchgangsloch (212) des ersten Deckels (211) über der Trennwand (250) positioniert und in einer Mitte des ersten Deckels (211) angeordnet ist, **dadurch gekennzeichnet, dass** das Durchgangsloch (212) des ersten Deckels (211) so angeordnet ist, dass es die Trennwand (250) in einer Draufsicht überlappt.

2. Batteriepack (1000) mit dem Doppeldeckel nach Anspruch 1, wobei ein Wärmeableitungsloch (216) im zweiten Deckel (215) des Doppeldeckels (210) ausgebildet ist.

3. Batteriepack (1000) mit dem Doppeldeckel nach Anspruch 1, ferner umfassend ein Strömungswegbildungselement (300), das von einer Oberseite der Trennwand (250) in einer Richtung des Durchgangslochs (212) vorsteht.

4. Batteriepack (1000) mit dem Doppeldeckel nach Anspruch 3, wobei das Strömungswegbildungselement (300) auf der linken und rechten Seite in einer Breitenrichtung der Trennwand (250) jeweils angeordnet ist.

5. Batteriepack (1000) mit dem Doppeldeckel nach Anspruch 3, wobei das Strömungswegbildungselement (300) umfasst: einen unteren Abschnitt, der mit einem oberen Abschnitt einer Seite der Trennwand (250) gekoppelt ist, und den oberen Abschnitt, der von der Trennwand (250) vorsteht, sodass sich eine Oberseite des oberen Abschnitts auf derselben Höhe wie oder niedriger als der erste Deckel (211) befindet.

6. Batteriepack (1000) mit dem Doppeldeckel nach Anspruch 5, wobei das Strömungswegbildungselement (300) ein Stützbein (310) umfasst, das auf einer oberen Fläche der Trennwand (250) gestützt wird, wenn das Strömungswegbildungselement (300) bei der Entzündung des Batteriemoduls (100) gebogen wird.

7. Batteriepack (1000) mit dem Doppeldeckel nach Anspruch 1 oder Anspruch 2, ferner umfassend eine Wärmeableitungsführung (400) zwischen dem ersten Deckel (211) und dem zweiten Deckel (215), wobei die Wärmeableitungsführung (400) dazu konfiguriert ist, die Wärmeableitung zu führen.

8. Batteriepack (1000) mit dem Doppeldeckel nach Anspruch 7, wobei die Wärmeableitungsführung (400) auf gegenüberliegenden Seiten in Bezug auf das Durchgangsloch (212) jeweils angeordnet ist.

9. Batteriepack (1000) mit dem Doppeldeckel nach Anspruch 8, wobei die Wärmeableitungsführung (400) an gegenüberliegenden Kanten des Durchgangslochs (212) jeweils angeordnet ist.

10. Batteriepack (1000) mit dem Doppeldeckel nach Anspruch 7, wobei die Wärmeableitungsführung (400) zwischen dem ersten Deckel (211) und dem zweiten Deckel (215) öffenbar und schließbar ist, und die Wärmeableitungsführung (400) geöffnet wird, um Wärme abzuleiten, wenn sich das Batteriemodul (100) entzündet.

11. Batteriepack (1000) mit dem Doppeldeckel nach Anspruch 10, wobei die Wärmeableitungsführung (400) umfasst: eine untere Führung (410), die am ersten Deckel (211) angeordnet ist; und eine obere Führung (420), die am zweiten Deckel (215) angeordnet ist.

## Revendications

1. Bloc-batterie (1000) avec un double capot, le bloc-batterie (1000) comprenant : une pluralité de modules de batterie (100) ; et
un boîtier (200) logeant les modules de batterie (100), dans lequel le boîtier (200) comprend le double capot (210) disposé au niveau d'une partie supérieure du boîtier (200), et le double capot (210) comprend :
un premier couvercle (211) disposé au-dessus du module de batterie (100) et présentant un trou traversant (212) ;
un second couvercle (215) au-dessus du premier couvercle (211) et espacé du premier couvercle (211), et
une paroi de séparation (250) entre les modules de batterie (100) positionnés sur les côtés gauche et droit dans le boîtier (200),
dans lequel la paroi de séparation (250) est disposée en dessous du double capot (210), et
dans lequel le trou traversant (212) du premier couvercle (211) est positionné au-dessus de la paroi de séparation (250) et disposé au centre du premier couvercle (211), **caractérisé en ce que** le trou traversant (212) du premier couvercle (211) est disposé de manière à chevaucher la paroi de séparation (250) dans une vue en plan.

2. Bloc-batterie (1000) avec le double capot selon la revendication 1, dans lequel un trou de dissipation de chaleur (216) est formé dans le second couvercle (215) du double capot (210).

3. Bloc-batterie (1000) avec le double capot selon la revendication 1, comprenant en outre un élément de formation de trajet d'écoulement (300) faisant saillie depuis un sommet de la paroi de séparation (250) dans une direction du trou traversant (212).

4. Bloc-batterie (1000) avec le double capot selon la revendication 3, dans lequel l'élément de formation de trajet d'écoulement (300) est disposé sur les côtés gauche et droit dans une direction de la largeur de la paroi de séparation (250), respectivement.

5. Bloc-batterie (1000) avec le double capot selon la revendication 3, dans lequel l'élément de formation de trajet d'écoulement (300) comprend :
une partie inférieure couplée à une partie supérieure d'un côté de la paroi de séparation (250), et
la partie supérieure faisant saillie de la paroi de séparation (250) de sorte qu'un sommet de ladite partie supérieure est situé à un même niveau ou plus bas que le premier couvercle (211).

6. Bloc-batterie (1000) avec le double capot selon la revendication 5, dans lequel l'élément de formation de trajet d'écoulement (300) comprend une patte de support (310) qui est supportée sur une surface supérieure de la paroi de séparation (250) lorsque l'élément de formation de trajet d'écoulement (300) est plié lors de l'inflammation du module de batterie (100).

7. Bloc-batterie (1000) avec le double capot selon la revendication 1 ou la revendication 2, comprenant en outre un guide de dissipation de chaleur (400) entre le premier couvercle (211) et le second couvercle (215), le guide de dissipation de chaleur (400) étant configuré pour guider la dissipation de chaleur.

8. Bloc-batterie (1000) avec le double capot selon la revendication 7, dans lequel le guide de dissipation de chaleur (400) est disposé sur des côtés opposés par rapport au trou traversant (212), respectivement.

9. Bloc-batterie (1000) avec le double capot selon la revendication 8, dans lequel le guide de dissipation de chaleur (400) est disposé sur des bords opposés du trou traversant (212), respectivement.

10. Bloc-batterie (1000) avec le double capot selon la revendication 7, dans lequel le guide de dissipation de chaleur (400) est ouvrable et fermable entre le premier couvercle (211) et le second couvercle (215), et le guide de dissipation de chaleur (400) est ouvert pour dissiper la chaleur lorsque le module de batterie (100) s'enflamme.

11. Bloc-batterie (1000) avec le double capot selon la revendication 10, dans lequel le guide de dissipation de chaleur (400) comprend :
un guide inférieur (410) disposé sur le premier couvercle (211) ; et
un guide supérieur (420) disposé sur le second couvercle (215).
